# FASCICULE DE BREVET EUROPEEN

(11) **EP 1 865 253 B1**
(45) Date de publication et mention de la délivrance du brevet: **27.01.2010**
(21) Numéro de dépôt: 07109805.7
(22) Date de dépôt: 07.06.2007
(51) Int. Cl.: F21V 17/00, B60Q 1/04, B60R 21/34

(54) **Ensemble d'un support de bloc optique et d'une aile de véhicule automobile et support appartenant à un tel ensemble**
Anordnung aus einer Beleuchtungsblockhalterung und einem Kotflügel eines Kraftfahrzeugs und Halterung, die zu einer solchen Anordnung gehört
Support assembly for an optical unit and a wing of an automobile vehicle and support pertaining to same

(30) Priorité: 08.06.2006 FR 0652067
(43) Date de publication de la demande: 12.12.2007
(73) Titulaire: Compagnie Plastic Omnium, 69007 Lyon (FR)
(72) Inventeur: Troton, Jean, 81375, Munich (DE)
(74) Mandataire: Remy, Vincent Noel Paul

(56) Documents cités:
- EP-A- 1 544 034
- EP-A1- 0 839 704

## Description

La présente invention concerne un ensemble d'un support de bloc optique et d'une aile de véhicule automobile et un support appartenant à un tel ensemble.

On connaît, du document EP 0 839 704 B1, un support latéral destiné à être mis en place à l'avant d'un véhicule automobile, autour d'un compartiment moteur, et à supporter des éléments de carrosserie en matière plastique, tels qu'une aile et une peau de pare-chocs et des éléments fonctionnels de celui-ci, comme un bloc optique et une batterie. Ce support est destiné à se solidariser à un longeron inférieur de la caisse du véhicule et à un longeron supérieur associé.

Un tel support comprend un casier, entourant un logement destiné à accueillir un bloc optique. Ce support comprend également des moyens de liaison avec l'aile dont la nature n'est pas détaillée dans le document.

Ainsi, le bloc optique et l'aile sont positionnés relativement à une même pièce, ce qui permet une gestion facile des jeux et affleurements entre l'aile et le bloc optique, lors de l'assemblage du véhicule.

Par ailleurs, on sait que l'aile en matière plastique d'un véhicule a tendance à se dilater, en raison des variations de température extérieure, et que cette dilatation se traduit par des déplacements relatifs de l'aile en regard des pièces connexes, notamment en zone avant du véhicule, en regard du bloc optique.

Le support décrit dans EP 0 839 704 B1 s'accomode aisément de ces dilatations car, étant constitué en matière plastique comme l'aile et ayant la même dimension que l'aile, ce support se dilate de façon équivalente à ladite aile.

Cependant, lorsque, pour des raisons esthétiques, le bloc optique doit être fermement maintenu par rapport au châssis et, de ce fait, ne peut pas suivre les déplacements de l'aile vers l'avant du véhicule, les jeux et affleurements entre l'aile et le bloc optique ne sont plus garantis, ce qui peut entraîner une dégradation de l'aspect de l'avant du véhicule.

La présente invention vise à remédier à cet inconvénient.

A cet effet, l'invention a pour objet un ensemble d'un support de bloc optique et d'une aile de véhicule automobile, l'aile ayant une face intérieure, une face extérieure et un bord proximal destiné à border un vitrage du bloc optique, le support étant destiné à se solidariser à un longeron inférieur et à un longeron supérieur du véhicule, le support comportant une surface externe de solidarisation à une portion de la face intérieure de l'aile située au voisinage du bord proximal de l'aile, ladite surface externe de solidarisation s'étendant le long du bord proximal de l'aile.

Grâce à l'invention, la surface externe de solidarisation du support permet la liaison continue du support et du bord proximal de l'aile et empêche tout déplacement du bord proximal de l'aile par rapport au bloc optique.

Le bord proximal de l'aile, lié de cette façon au support, n'est donc pas susceptible de dégrader les jeux et affleurements réglés initialement entre le bloc optique et l'aile, même lorsque l'aile subit une forte dilatation.

La dilatation de l'aile ne peut donc plus se traduire par un déplacement vers l'avant du bord proximal de l'aile. Grâce à l'invention, la partie centrale de l'aile est laissée libre, car le support n'est solidarisé à l'aile que par sa surface externe de solidarisation qui se trouve au voisinage du bord proximal de l'aile. L'aile est donc libre de se déformer légèrement selon la direction transversale du véhicule, en « gonflant » vers l'extérieur du véhicule, et cette déformation n'entraîne pas de dégradations de fonction ou d'aspect visible du véhicule.

En outre, l'ensemble du support et de l'aile constitue un module d'aile comprenant le bloc optique. Ce module peut être fabriqué en dehors de la chaîne principale de montage. L'invention permet donc une économie de coûts de fabrication.

Avantageusement, le support comporte un casier, délimitant un logement destiné à accueillir le bloc optique, et une surface extérieure du casier comprend la surface externe de solidarisation.

Ainsi, la surface externe de solidarisation est placée au plus près du bloc optique et la gestion des jeux et affleurements entre ces deux éléments du véhicule automobile est optimisée dès leur assemblage. L'esthétique de l'avant du véhicule automobile est donc garantie.

Avantageusement, le support comprend des moyens de fixation d'au moins un des éléments de la liste suivante :
- des moyens de refroidissement ;
- une grille centrale ;
- un guide d'air ;
- un câble électrique.

Ainsi, le support est conçu pour que de nombreux éléments fonctionnels du véhicule soient rapportés directement sur celui-ci en dehors de la chaîne de montage principale. Ces éléments sont ensuite rapportés sur la caisse avec le support, en une seule étape, ce qui permet d'économiser des coûts de fabrication.

Avantageusement, le support comprend des moyens de mise en référence d'une peau de pare-chocs du véhicule et d'au moins un élément porté par le support.

Un tel élément peut, par exemple, être l'aile, le bloc optique ou encore une grille centrale.

Ainsi, ces moyens de mise en référence permettent de positionner les bords de la peau de pare-chocs au plus près des différents éléments portés par le support, de façon à garantir une gestion des jeux et affleurements optimale entre la peau de pare-chocs et chacun de ces éléments.

Optionnellement, les moyens de mise en référence comprennent un presseur.

Avantageusement, le support comprend des moyens d'absorption d'énergie, destinés à être agencés au voisinage du longeron supérieur du véhicule automobile.

Lorsque le support est mis en place sur la caisse en blanc du véhicule, ces moyens se trouvent dans la zone dans laquelle la tête d'un piéton vient heurter le véhicule, en cas de choc piéton. Ils permettent d'amortir le choc subi par la tête du piéton et garantissent donc une meilleure sécurité pour les personnes se trouvant dans l'environnement du véhicule.

Dans un mode de réalisation particulier de l'invention, le support comprend des moyens fusibles de fixation du bloc optique au support.

Le bloc optique est un élément rigide du véhicule affleurant à la carrosserie de celui-ci, et est donc susceptible de blesser un piéton heurté par le véhicule.

Or, dans ce mode de réalisation, en cas de choc, la fixation du bloc optique au support se casse et le bloc optique glisse vers l'arrière du véhicule automobile. Le bloc optique n'est plus sur la trajectoire du piéton à la suite du choc, et ne risque donc plus de blesser celui-ci. Ainsi, la sécurité du piéton est encore améliorée.

Optionnellement, le support est constitué au moins partiellement en matière plastique, notamment en PolyPropylène (PP).

Avantageusement, le support comprend une partie constituée en un matériau métallique.

Il est en effet plus simple de fixer deux éléments constitués en un même matériau entre eux.

Ainsi, le support est hybride : les parties métalliques de celui-ci sont destinées à être en contact avec la caisse en blanc et les parties en matière plastique de celui-ci sont destinées à être en contact avec les pièces de carrosserie en matière plastique.

Un tel support permet de garantir une fixation simple, d'une part, du support sur la caisse en blanc métallique du véhicule et, d'autre part, des éléments de carrosserie en matière plastique, notamment l'aile, sur le support.

Dans un mode de réalisation particulier, la partie métallique du support est conformée en S, une première extrémité du S étant destinée à se solidariser au longeron inférieur du véhicule automobile, l'extrémité opposée étant destinée à se solidariser au longeron supérieur.

Optionnellement, la surface externe de solidarisation et la portion de la face intérieure de l'aile sont solidarisées entre elles par collage ou par soudage.

Dans un mode de réalisation préféré de l'invention, l'aile est une aile avant de véhicule automobile, le bord proximal constituant le bord avant de l'aile.

L'invention a également pour objet un support de bloc optique d'un véhicule automobile, caractérisé en ce qu'il appartient à l'ensemble selon l'invention.

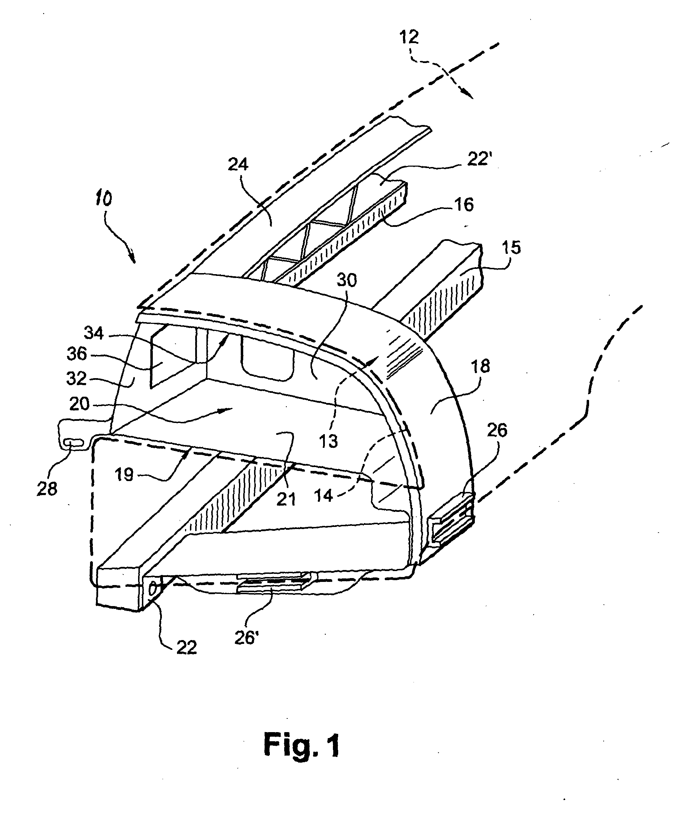

Dans le but de mieux faire comprendre l'invention, on va en décrire maintenant un mode de réalisation, en référence au dessin annexé représentant un support de bloc optique selon un mode de réalisation de l'invention en perspective.

### Description d'un exemple:

### Vocabulaire :

| Des revendications | De l'exemple | Référence sur les dessins |
|---|---|---|
| Support de bloc optique | Support | 10 |
| Aile de véhicule automobile | Aile avant | 12 |
| Face intérieure de l'aile | Face intérieure | 13 |
| Bord proximal de l'aile | Bord avant de l'aile | 14 |
| Longeron inférieur | Longeron inférieur | 15 |
| Longeron supérieur | Longeron supérieur | 16 |
| Surface externe de solidarisation | Surface externe de solidarisation | 18 |
| Casier | Casier | 19 |
| Logement | Logement | 20 |
| | Platine de support | 21 |
| | Patte de fixation au longeron inférieur | 22 |
| | Lame de fixation au longeron supérieur | 22' |
| Moyens d'absorption d'énergie | Absorbeur de choc piéton | 24 |
| Moyens de mise en référence | Presseur aile/pare-choc | 26, 26' |
| Moyens de fixation d'une grille centrale | Orifice de fixation | 28 |
| | Fond du casier | 30 |
| | Paroi latérale interne du casier | 32 |
| | Paroi supérieure du casier | 34 |
| | Regards du casier | 36 |

Sur la figure, on voit l'ensemble du support 10 et de l'aile 12 mis en place sur la caisse du véhicule automobile. Le support 10 est peu encombrant : il s'étend entre l'avant du véhicule automobile et l'avant de l'arche de roue du véhicule. Il est fixé au longeron inférieur 15 du véhicule et au longeron supérieur 16, lesquels constituent la caisse du véhicule automobile au voisinage du bloc optique.

La patte 22 du support 10 est solidarisée à la face extérieure (dirigée vers l'extérieur du véhicule) du longeron inférieur de façon classique, par exemple par vissage ou par rivetage et comprend à cet effet un orifice de fixation. Le support est fixé au longeron inférieur en un seul point, ce qui permet de minimiser les points de fixation du support à la caisse pour mieux contrôler, d'une part, le comportement du support et, d'autre part, la transmission des efforts à la caisse en cas de choc. La lame 22' du support 10 est solidarisée à la face supérieure du longeron supérieur par vissage ou par rivetage.

Le support 10 comprend un casier 19, métallique, délimitant un logement 20 destiné à accueillir un bloc optique et des moyens de fixation du bloc optique dans le logement 20 (non représentés sur la figure). Le casier 19 est constitué par une paroi inférieure, formant une platine de support 21 du bloc optique, une paroi latérale interne 32, un fond 30 et une paroi supérieure 34 bombée, fermant le casier 19 supérieurement et latéralement sur son côté externe.

La surface extérieure de la paroi supérieure 34 du casier 19 supporte une surface externe de solidarisation 18, destinée à se solidariser à une portion de la face intérieure 13 de l'aile 12, située au voisinage du bord avant 14 de l'aile. Une fois l'aile 12 et le support 10 solidarisés, la surface de solidarisation 18 s'étend le long du bord avant 14 de l'aile 12. Cette surface de solidarisation est réalisée en matière plastique et est assujettie au casier 19 par surmoulage (réalisant un accrochage mécanique)

La solidarisation du support et de l'aile 12 est effectuée à l'aide d'une fixation de type surfacique, par exemple par collage ou par soudage. De cette façon, la dilatation de l'aile 12 au niveau de son bord avant 14 est empêchée et les jeux et affleurements entre le support et l'aile 12, et donc entre le bloc optique et l'aile sont plus précis. La dilatation du bord avant de l'aile 12 est alors répercutée dans la partie centrale de celle-ci, qui n'est pas fixée et qui gonfle.

La paroi latérale 32 et le fond 30 du casier 19 comportent des regards 36 : ces regards permettent à un opérateur de changer facilement l'ampoule du bloc optique sans démonter celui-ci ou le support.

Le support 10 est hybride : il comporte la surface de solidarisation 18 en matière plastique, par exemple en PolyPropylène (PP), destinée à s'assembler avec l'aile, également en matière plastique, et le reste, constitué en un matériau métallique, par exemple en tôle, destinée à être assemblée à la caisse du véhicule.

La partie métallique du support 10 est conformée en S et comporte à son extrémité basse la patte 22, et la lame 22' étant agencée son extrémité haute.

La partie métallique comprend également la platine de support 21 du bloc optique, la paroi latérale 32 et le fond 30, appartenant au casier 19. Les parois 30, 32 peuvent toutefois comprendre de la matière plastique, surmoulée sur le pourtour des regards 36, de façon à éviter que l'opérateur ne se blesse avec des bords tranchants.

L'élément assurant le support du bloc optique est donc constitué par un matériau rigide.

Le support comporte également un absorbeur 24 de choc piétons, destiné à être mis en place au-dessus du longeron supérieur 16 du véhicule automobile. Cet absorbeur 24, ménagé dans la partie métallique du support, se prolonge vers l'arrière du véhicule pour couvrir une partie importante du longeron supérieur 16. Il comporte des nervures, destinées à reposer sur le longeron supérieur et à amortir le choc subi par la tête d'un piéton heurté par le véhicule automobile.

Le support comporte également des presseurs aile/pare-chocs 26, 26' en matière plastique. En particulier, dans ce mode de réalisation, le support 10 comprend un presseur latéral 26 agencé sur la paroi supérieure 34, au voisinage de la surface de solidarisation 18, et un presseur frontal 26',. Ces presseurs 26, 26' sont obtenus par surmoulage de matière plastique sur la tôle du support

Les presseurs 26, 26' sont destinés à la mise en référence des bords de l'aile 12 et du pare-chocs du véhicule automobile. Ces presseurs 26, 26' comportent respectivement une glissière comportant des languettes élastiques agencées pour pincer ensemble les bords de l'aile 12 et du pare-chocs.

Le support 10 comporte également un orifice de fixation 28 permettant le positionnement et la fixation d'une grille centrale (non représentée) du véhicule par vissage. Il comporte également des moyens de fixation d'un radiateur (non représenté) situés à l'arrière du support, à l'extrémité de la platine de support 21.

Ainsi, le support comporte de nombreuses fonctions et constitue un véritable module d'aile pouvant être fabriqué en dehors de la chaîne de montage principale. L'aile est alors d'abord rapportée au support avant d'être solidarisée à la caisse du véhicule automobile.

La fermeture du casier permet de maintenir la géométrie du module d'aile pendant son transport avant sa fixation au véhicule, notamment en prévenant son éventuelle déformation sous le poids du bloc optique en cas de manutention du module d'aile suspendu par la lame 22'.

### Variantes :

- les moyens de fixation du bloc optique dans le logement sont fusibles, de façon à éviter que le bloc optique ne blesse un piéton heurté par le véhicule ;
- le support comprend des moyens de fixation d'autres éléments comme des câbles électriques, un guide d'air, etc.
- la paroi externe 34 ou le support 10 dans son intégralité peuvent être constitués par de la matière plastique.

## Revendications

1. Ensemble d'un support (10) de bloc optique et d'une aile (12) de véhicule automobile, l'aile (12) ayant une face intérieure (13), une face extérieure et un bord proximal (14) destiné à border un vitrage du bloc optique, le support (10) étant destiné à se solidariser à un longeron inférieur (15) et à un longeron supérieur (16) du véhicule, le support (10) comportant une surface externe de solidarisation (18) à une portion de la face intérieure (13) de l'aile (12) **caractérisé en ce que** la face intérieure (13) de l'aile (12) est située au voisinage du bord proximal (14) de l'aile (12), ladite surface externe de solidarisation (18) s'étendant le long du bord proximal (14) de l'aile.

2. Ensemble selon la revendication 1, dans lequel le support (10) comporte un casier (19), délimitant un logement (20) destiné à accueillir le bloc optique, une surface extérieure du casier comprenant la surface externe de solidarisation (18).

3. Ensemble selon la revendication 1 ou 2, dans lequel le support (10) comprend des moyens de fixation (28) d'au moins un des éléments de la liste suivante :
- des moyens de refroidissement ;
- une grille centrale ;
- un guide d'air ;
- un câble électrique.

4. Ensemble selon l'une des revendications 1 à 3, dans lequel le support comprend des moyens de mise en référence (26, 26') d'une peau de pare-chocs du véhicule et d'au moins un élément porté par le support, notamment l'aile (12) et le bloc optique.

5. Ensemble selon la revendication 4, dans lequel les moyens de mise en référence comprennent un presseur (26, 26').

6. Ensemble selon l'une quelconque des revendications précédentes, dans lequel le support (10) comprend des moyens d'absorption d'énergie (24), destinés à être agencés au voisinage du longeron supérieur (16) du véhicule automobile.

7. Ensemble selon l'une quelconque des revendications précédentes, dans lequel le support (10) comprend des moyens fusibles de fixation du bloc optique au support.

8. Ensemble selon l'une quelconque des revendications précédentes, dans lequel le support (10) est constitué au moins partiellement en matière plastique, notamment en PolyPropylène (PP).

9. Ensemble selon la revendication 8, dans lequel le support (10) comprend une partie constituée en un matériau métallique.

10. Ensemble selon la revendication 9, dans lequel la partie métallique du support est conformée en S, une première extrémité du S étant destinée à se solidariser au longeron inférieur (15) du véhicule automobile, l'extrémité opposée étant destinée à se solidariser au longeron supérieur (16).

11. Ensemble selon l'une quelconque des revendications précédentes, dans lequel la surface externe de solidarisation (18) et la portion de la face intérieure (13) de l'aile (12) sont solidarisées entre elles par collage ou par soudage.

12. Ensemble selon l'une quelconque des revendications précédentes, dans lequel l'aile (12) est une aile avant de véhicule automobile, le bord proximal (14) constituant le bord avant de l'aile.

13. Support (10) de bloc optique d'un véhicule automobile, **caractérisé en ce qu'**il appartient à l'ensemble selon l'une quelconque des revendications 1 à 12.

## Claims

1. An assembly comprising a motor vehicle fender (12) and a light unit support (10), the fender (12) having an inside face (13), an outside face, and a proximal edge (14) for being placed adjacent to a glass of the light unit, the support (10) being designed to be secured to a bottom side rail (15) and to a top side rail (16) of the vehicle, the support (10) including a bonding outer surface (18) for bonding to a portion of the inside face (13) of the fender (12), the assembly being **characterized in that** the inside face (13) of the fender (12) is situated in the vicinity of the proximal edge (14) of the fender (12), said bonding outer surface (18) extending along the proximal edge (14) of the fender.

2. An assembly according to claim 1, wherein the support (10) includes a box (19) that defines a housing (20) for receiving the light unit, an outer surface of the box including the bonding outer surface (18).

3. An assembly according to claim 1 or claim 2, wherein the support (10) includes fastener means (28) for fastening at least one of the elements in the following list:
· cooling means;
· a central grille;
· an air guide; and
· an electric cable.

4. An assembly according to any one of claims 1 to 3, wherein the support includes referencing means (26, 26') for referencing a bumper skin of the vehicle, and at least one element carried by the support, in particular the fender (12) and the light unit.

5. An assembly according to claim 4, wherein the referencing means comprise a presser (26, 26').

6. An assembly according to any preceding claim, wherein the support (10) includes energy absorber means (24) for placing in the vicinity of the top side rail (16) of the motor vehicle.

7. An assembly according to any preceding claim, wherein the support (10) includes fusible means for fastening the light unit to the support.

8. An assembly according to any preceding claim, wherein the support (10) is made at least in part out of a plastics material, in particular out of polypropylene (PP).

9. An assembly according to claim 8, wherein the support (10) includes a portion made of a metal.

10. An assembly according to claim 9, wherein the metal portion of the support is S-shaped, a first end of the S-shape being for securing to the bottom side rail (15) of the motor vehicle, the opposite end thereof being for securing to the top side rail (16).

11. An assembly according to any preceding claim, wherein the bonding outer surface (18) and the portion of the inside face (13) of the fender (12) are secured to each other by adhesive or by heat sealing.

12. An assembly according to any preceding claim, wherein the fender (12) is a motor vehicle front fender, with the proximal edge (14) constituting the front edge of the fender.

13. A motor vehicle light unit support (10), **characterized in that** it forms part of the assembly according to any one of claims 1 to 12.

## Patentansprüche

1. Anordnung einer Halterung (10) eines Beleuchtungsmoduls und eines Kotflügels (12) eines Kraftfahrzeugs, wobei der Kotflügel (12) eine Innenfläche (13), eine Außenfläche und einen proximalen Rand (14) aufweist, der der Umrahmung einer Verglasung des Beleuchtungsmoduls dient, wobei vorgesehen ist, dass die Halterung (10) eine feste Verbindung mit einem unteren Längsträger (15) und einem oberen Längsträger (16) des Fahrzeugs eingeht, wobei die Halterung (10) eine äußere Fläche zur Verbindung (18) mit einem Abschnitt der inneren Fläche (13) des Kotflügels (12) aufweist, **dadurch gekennzeichnet, dass** sich die innere Fläche (13) des Kotflügels (12) nahe dem proximalen Rand (14) des Kotflügels (12) befindet, wobei sich die äußere Fläche zur Verbindung (18) längs des proximalen Randes (14) des Kotflügels erstreckt.

2. Anordnung nach Anspruch 1, in der die Halterung (10) ein Fach (19) aufweist, das ein Gehäuse (20) begrenzt, welches für die Aufnahme des Beleuchtungsmoduls vorgesehen ist, wobei eine äußere Fläche des Faches die äußere Verbindungsfläche (18) umfasst.

3. Anordnung nach Anspruch 1 oder 2, in der die Halterung (10) Mittel zur Befestigung (28) von mindestens einem der Elemente aus der folgenden Liste umfasst:
- Mittel zur Kühlung
- ein zentrales Gitter
- eine Luftführung
- ein elektrisches Kabel

4. Anordnung nach einem der Ansprüche 1 bis 3, in der die Halterung Mittel zur Herstellung eines eindeutigen räumlichen Bezuges (26, 26') einer Stoßfängerverkleidung des Fahrzeugs zu mindestens einem von der Halterung getragenen Element, insbesondere dem Kotflügel (12) und dem Beleuchtungsmodul, umfasst.

5. Anordnung nach Anspruch 4, in der die Mittel zur Herstellung eines räumlichen Bezugs einen Niederhalter (26, 26') umfassen.

6. Anordnung nach einem der vorhergehenden Ansprüche, in der die Halterung (10) Mittel zur Absorption von Energie (24) umfasst, die zur Anbringung nahe dem oberen Längsträger (16) des Kraftfahrzeugs vorgesehen sind.

7. Anordnung nach einem der vorhergehenden Ansprüche, in der die Halterung (10) mit Sollbruchstellen ausgestattete Mittel zur Befestigung des Beleuchtungsmoduls an der Halterung umfasst.

8. Anordnung nach einem der vorhergehenden Ansprüche, in der die Halterung (10) zumindest teilweise aus Kunststoff, insbesondere aus Polypropylen (PP), besteht.

9. Anordnung nach Anspruch 8, in der die Halterung (10) einen Teil umfasst, der aus einem metallischen Werkstoff besteht.

10. Anordnung nach Anspruch 9, in der der metallische Teil der Halterung eine S-Form aufweist, wobei ein erstes Ende des S eine feste Verbindung mit dem unteren Längsträger (15) des Kraftfahrzeugs eingeht, während das entgegengesetzte Ende eine feste Verbindung mit dem oberen Längsträger (16) eingeht.

11. Anordnung nach einem der vorhergehenden Ansprüche, in der die äußere Verbindungsfläche (18) und der Abschnitt der inneren Fläche (13) des Kotflügels (12) durch Kleben oder durch Schweißen miteinander verbunden werden.

12. Anordnung nach einem der vorhergehenden Ansprüche, in der es sich bei dem Kotflügel (12) um einen vorderen Kotflügel eines Kraftfahrzeugs handelt, wobei die proximale Kante (14) die vordere Kante des Kotflügels bildet.

13. Halterung des Beleuchtungsmoduls (10) eines Kraftfahrzeugs, **dadurch gekennzeichnet, dass** sie der Anordnung nach einem der Ansprüche 1 bis 12 zugehörig ist.
